# EUROPEAN PATENT APPLICATION

(11) **EP 4 644 297 A1**
(43) Date of publication of application: **05.11.2025**
(21) Application number: 24172912.8
(22) Date of filing: 29.04.2024
(51) Int. Cl.: B65G 13/075

(54) **BRAKE CONVEYOR ROLLER**

(71) Applicant: Interroll Holding AG, 6592 Sant' Antonino (CH)
(72) Inventor: Pomaska, Manuel, 41836 Hückelhoven (DE)
(74) Representative: Kohlhof, Stephan

(57) **Abstract**

Brake conveyor roller (4) for a roller conveyor (1), comprising
at least one axle element (41);
a roller tube (42) adapted to be rotatable about at least on axle element (41);
a brake (5) adapted to provide a brake force against the rotation of the roller tube (42) relative to the axle element (41),
wherein the brake comprises a first brake component (51) and a second brake component (52),
wherein one of said a first and second brake components (51, 52) is rotatably connected to the axle element and the other one of said a second and first brake components (52, 51) is rotatably connected to the roller tube (42),
wherein the first brake component (51) comprises an magnetic array (512) of magnetized sections (S, N),
wherein the second brake component (52) comprises an eddy current receiver (523) adapted to generate an eddy current brake effect in case that the first brake second brake component is rotated relative to the first brake component;
wherein the second brake component (52) comprises a second yoke element (524) adapted to provide a magnetic yoke effect (Y) attached to the eddy current receiver (523).

## Description

The invention refers to a brake conveyor roller.

EP 2 922 775 B1 discloses a Brake conveyor roller with magnetic brake effect. A roller tube is rotatably supported about an axis in a stationary bearing. An eddy current brake with a tubular eddy current receiver is located within the roller tube and rotatably connected thereto. A magnet is stationarily connected with the bearing. When the roller tube rotates, an eddy currents is induced in the insert by the magnetic field, which counteracts the rotary motion of the roller shell with a braking torque that increases with increasing speed. Without any rotation, no brake torque is generated so that said brake conveyor roller is not suitable as a holding brake.

Another brake conveyor roller using the eddy current brake effect is shown in EP 2 517 986 A1. A similar roller is actually used (see https://www.interroll.com/fileadmin/products/product_data/Roller-series-msc50/Series MSC 50 EN.pdf), which is designed for small axial lengths of 21 cm. Consequently there is provided very few space for accommodating the magnetic relevant components. To provide such small rollers with enough magnetic braking strength, high value magnetic components like rare earth metals and copper are used.

Other brake conveyor rollers using a magnetic braking effect are disclosed in EP 2 419 353 A1, and DE 10 2012 003 499 A1.

It is an objective of the present invention to provide an improved roller with magnetic brake effect.

The invention is solved by the matter of the independent claims; embodiments are subject of the subclaims and the description.

The inventive brake conveyor roller provides improved magnet properties. Due to the improved arrangement of the magnetic yoke element, the magnetic losses are significantly reduced compared to the conventional solution. That leads to the possibility of using less magnetic relevant material or the use of cheaper magnetic relevant materials. In particular the same brake effect can be achieved without the use of rare earth metals and without copper, but instead of using in particular ferrite magnets and aluminum.

As an example, instead of rare earth material for the magnetic array cheaper ferrite magnets can be used. Instead of copper, aluminum may be used for the eddy current receiver. Due to the improved magnetic arrangement, these magnetic materials provide the sufficient magnetic braking effect for the brake conveyor roller in a more cost efficient way.

Overall this leads to a cheaper brake conveyor roller having the same performance as the conventional solution. Alternatively the materials conventionally used can still be used, so that now the quantity of magnetic relevant material can be reduced to achieve the same brake effect. The term magnetic relevant material refers in particular to the material of the magnetic array and the eddy current receiver.

An exemplary embodiment of the invention is described with respect to the figures; herein show
- fig. 1: a roller conveyor in perspective view, comprising an inventive brake conveyor roller;
- fig. 2: a longitudinal section view of the brake conveyor roller of figure 1;
- fig. 3: a cross section of a brake component of the brake conveyor roller of figure 2 along the section line III-III of figure 2,
- fig. 4: a developed, partial view of the layers in the brake component of figure 3.

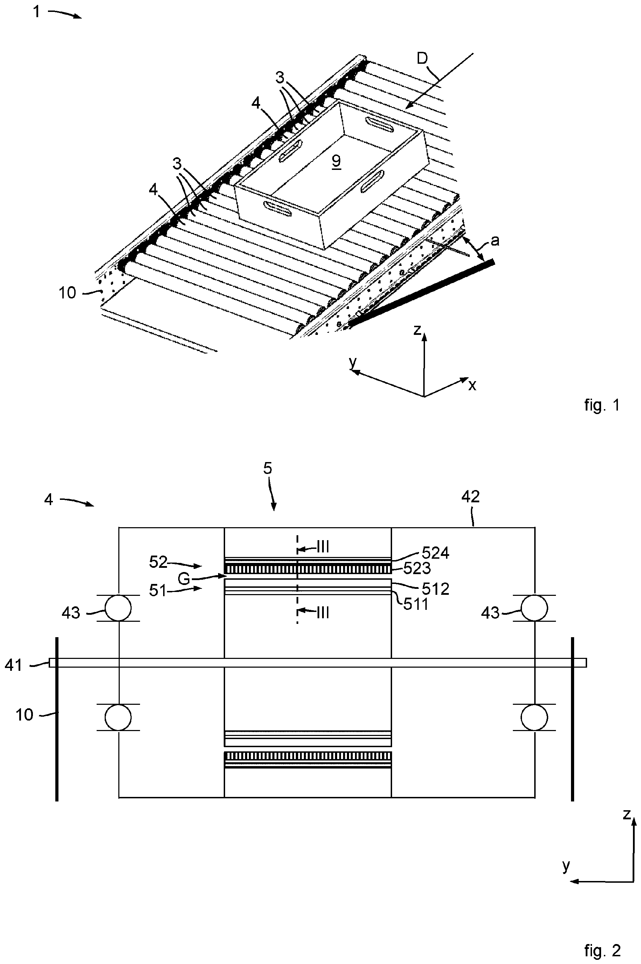

Figure 1 shows an inventive roller conveyor 1. The roller conveyor 1 comprises a plurality of rollers 3, 4, which are parallel arranged in a manner to provide a conveying track along a conveying direction D. The conveying rollers are mounted on a supporting frame 10.

The rollers 3, 4 are arranged in a manner to provide an conveying direction D, which is inclined at an angle a. Here the conveying direction D is a downhill direction in relation to the horizontal plane.

The rollers identified with the reference sign 3 are idler rollers. Without any braking or driving capacity. The rollers identified with the reference sign 4 are brake conveyor rollers, which are adapted to provide a brake force to the downhill conveyed object. Depending on the required brake effect, the number of brake conveyor rollers 4 in relation to the number of idler rollers is selected. In certain embodiment, no idler rollers may be used.

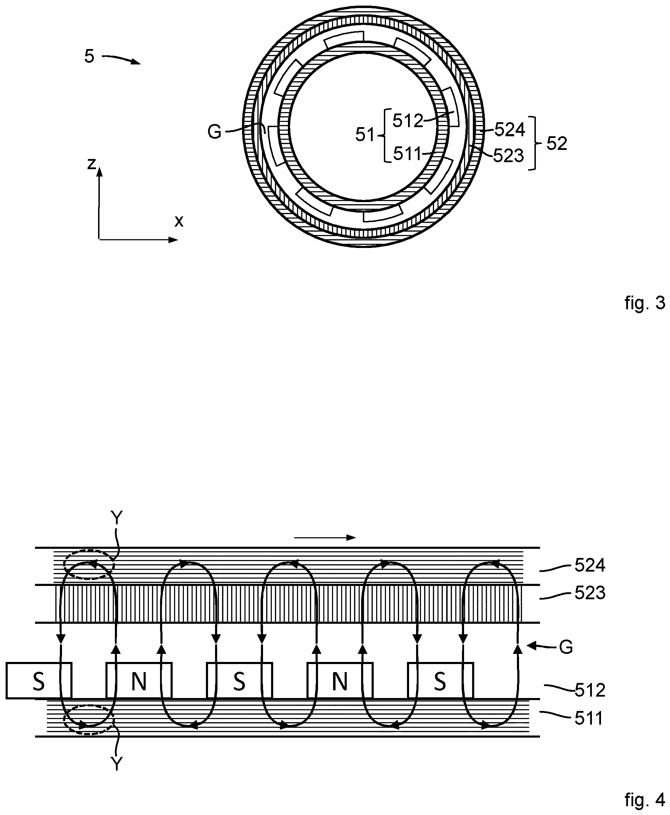

Reference is made to figures 2 to 3 showing components of the brake conveyor roller 4 in more detail. The brake conveyor roller 4 comprises at least one non-rotating axle element 41, which is fixed to the supporting frame 10. A roller tube 42 is held rotatably against the axle element 41 via bearings 43. The axle element may be a one pieces shaft as shown or may be two separate elements.

The brake conveyor roller 4 comprises a brake assembly 5 located within the roller tube 42. The brake assembly 5 has a first brake component 51 and a second brake component 52. In the present embodiment the first brake component 51 is rotatably connected to the axle element; the second brake component 52 is rotatably connected to the roller tube. The first brake component 51 is located radially within the second brake component 52.

In an alternative embodiment (not shown) the first brake component is rotatably connected to the roller tube; the second brake component is rotatably connected to the axle element. The second brake component is located radially within the first brake component.

The term "rotatably connected" does not require a direct fixation between the components; instead in particular a transmission may be provided in between. For clarification: the first brake component 51 is considered as being not rotatably connected with the second brake component 52.

The first brake component 51 comprises a magnetized ring having a magnetic array 512 of magnetized sections S, N, wherein the magnetized sections S, N alternate in the circumferential direction. The magnetized sections S, N generate magnetic fields. Extending radially from the magnetized sections S, N with alternating polarity. In the present example each of the magnetized sections S, N are made as separate elements; in another embodiment the plurality of magnetized sections S, N can be made from one piece, where the one piece array comprises sections of said alternating polarities.

The second brake component 52 comprises an eddy current receiver 523. The eddy current receiver 523 comprises a ring of a material having a high electric conductivity, like copper or aluminum. When moved relative to the magnetic array 512 of magnetized sections S, N, an eddy current is generated within the eddy current receiver, effecting a brake force between the first and the second brake components 51, 52.

To enable relative movement, the first brake component 51 and the second brake component 52 are held with an radial distance to each other, so an air gap G is located between the first component 51 and the second brake component 52.

Materials, which are most suitable for the eddy current receiver 523 have a high electric conductivity. To increase the magnetic flux, a second magnetic yoke element 524 is provided to enable a yoke effect Y to the magnetic flux. The second yoke element 524 is arranged on a radial side of the eddy current receiver 523 facing away from the magnetic array 512 of magnetized sections S, N.

Also on the first brake component there is provided a first yoke element to enable a yoke effect Y to the magnetic flux. The first yoke element 511 is arranged on a radial side of the magnetic array 512 facing away from the eddy current receiver 523.

For the magnetic yoke element, materials with a high magnetic permeability like steel are preferred. Steel has a lower electric conductivity compared to copper and aluminum and is therefore less preferred for the eddy current receiver. Due to the high permeability of more than1.000 H/m in combination with low cost, steel is a preferred material for the use as the magnetic yoke element.

Compared to the solution disclosed in EP 2 922 775 B1 there is no air gap between the eddy current receiver 523 and the second yoke element 524. In particular the yoke element 524 is directly attached to the eddy current receiver 523 in a sandwiched manner.

As a result the magnetic loss of the magnetic flux is lower compared to the prior art solution, so that the generated eddy current is higher and hence the eddy current brake effect is increased. This enables to generate the same eddy current brake effect with fewer material or with material of lower performance at lower costs. So instead of copper, aluminum may be used, which is much cheaper. The same effect can be achieved with other materials like ferrite, SmCo, AlNiCo, MnAIC, PtCo or recycled NdFeB instead of virgin rare earth materials for the magnetic array 512.

The structure of the brake conveyor roller shown in figures 2 to 4 is simplified and relates mainly to the magnetic relevant brake components. These components can be combined at will with another advantageous embodiments already known from the prior art, such as a centrifugal device disclosed in EP 2 419 353 B1.

The terms "first" and "second" are to be understood merely as a individualization of certain components. It is not to be understood as a numbering or counting of components. So the presence of a second component does not require the presence of a first component.

### List of reference signs

- 1: roller conveyor
- 3: idler roller
- 4: brake conveyor roller
- 41: axle element
- 42: roller tube
- 43: bearing
- 5: brake
- 51: first brake component
- 511: first (inner) magnetic yoke element
- 512: magnetic array
- 52: second brake element
- 523: eddy current receiver
- 524: second (outer) magnetic yoke element
- 10: supporting frame
- G: air gap
- Y: magnetic yoke effect
- a: angle

## Claims

1. Brake conveyor roller (4) for a roller conveyor (1), comprising at least one axle element (41 );
a roller tube (42) adapted to be rotatable about at least on axle element (41); a brake (5) adapted to provide a brake force against the rotation of the roller tube (42) relative to the axle element (41),
wherein the brake comprises a first brake component (51) and a second brake component (52),
wherein one of said a first and second brake components (51, 52) is rotatably connected to the axle element (41) and the other one of said a second and first brake components (52, 51) is rotatably connected to the roller tube (42),
wherein the first brake component (51) comprises an magnetic array (512) of magnetized sections (S, N),
wherein the second brake component (52) comprises an eddy current receiver (523) adapted to generate an eddy current brake effect in case that the first brake second brake component is rotated relative to the first brake component;
**characterized in**
**that** the second brake component (52) comprises a second yoke element (524) adapted to provide a magnetic yoke effect (Y) attached to the eddy current receiver (523).

2. Brake conveyor roller (4) according to the preceding claim,
**characterized in**
**that** the second yoke element (524) is attached to the eddy current receiver (523) without an air gap in between the second yoke element (524) and the eddy current receiver (523).

3. Brake conveyor roller (4) according to any of the preceding claims,
**characterized in**
**that** the second yoke element (524) fixedly attached to the eddy current receiver (523).

4. Brake conveyor roller (4) according to any of the preceding claims,
**characterized in**
**that** the second yoke element (524) is located on a side of the eddy current receiver (523), facing away from the magnetic array (512), in particular radially outward of the eddy current receiver (523).

5. Brake conveyor roller (4) according to any of the preceding claims,
**characterized in**
**that** the first brake component (51) comprises a first yoke element (511) adapted to provide a magnetic yoke effect (Y) attached magnetic array (512).

6. Brake conveyor roller (4) according to any of the preceding claims,
**characterized in**
**that** the first yoke element (511) is attached to the magnetic array (512) without an air gap in between the first yoke element (511) and the magnetic array (512).

7. Brake conveyor roller (4) according to any of the preceding claims,
**characterized in**
**that** the first yoke element (511) is fixedly attached to the magnetic array (512).

8. Brake conveyor roller (4) according to any of the preceding claims,
**characterized in**
**that** the second and/or first yoke element (524, 511) is made from a material having a magnetic permeability of at least 1000 H/m (measured at room temperature).

9. Brake conveyor roller (4) according to any of the preceding claims,
**characterized in**
**that** the eddy current receiver (523) is made from a material having an electrical conductivity of min 10⁷ S/m, measured at room temperature.

10. Roller conveyor (1), comprising
- a plurality of rollers (3,4) arranged parallel to each other and adapted to provide a conveying track along a conveying direction (D), the conveying direction (D) is in particular perpendicular to an orientation of the rollers;
- a supporting frame (10) on which the rollers (3,4) are mounted;
wherein the rollers (3,4) are arranged in a manners so as to provide an inclined conveying track having a downhill conveying direction (D);
- at least one brake conveyor roller (4) according to any of the preceding claims.
